# EUROPEAN PATENT APPLICATION

(11) **EP 0 798 169 A1**
(43) Date of publication of application: **01.10.1997**
(21) Application number: 97301977.1
(22) Date of filing: 24.03.1997
(51) Int. Cl.: B60R 21/16

(54) **Bag body of air bag device**

(30) Priority: 26.03.1996 JP 70671/96
(71) Applicant: KABUSHIKI KAISHA TOKAI RIKA DENKI SEISAKUSHO, Niwa-gun Aichi-ken (JP)
(72) Inventor: Gotoh, Kenji, K.K. Tokai-rika-Denki-Seisakusho, Niwa, Aichi-ken (JP)
(74) Representative: Cookson, Barbara Elizabeth

(57) **Abstract**

A bag body (10) of an air bag device includes a bag main body (30) which is accommodated in a folded state and is provided to be inflatable due to pressure of gas blown out from a gas blowout hole (28) of an inflator (24), and a main body protecting member (40) hung down from the bag main body so as to be interposed between the bag main body and the gas blowout hole. Accordingly, gas blown out from the gas blowout hole is brown against the main body protecting member and the bag main body is thereby protected from gas.

## Description

### BACKGROUND OF THE INVENTION

### Field of the Invention:

The present invention relates to a bag body of an air bag device provided in a vehicle.

### Description of the Related Art:

An air bag device, for example, an air bag device for a driver's seat which is provided at a steering wheel includes an inflator which generates gas at the time of sudden deceleration of a vehicle. The inflator is fixed via a base plate to a hub which is provided at a core bar of a steering wheel. Further, an actuating device, a detonator, a booster, a gas generating material, and a filter are accommodated within the inflator and gas can be generated therewithin. In addition, a plurality of gas blowout holes are formed in the inflator and the gas generated within the inflator can be blown out of the inflator. A bag body is disposed in a folded state at a vehicle occupant's side of the inflator and an opening portion of the bag body is fixed to the base plate with the inflator being covered by the bag body from the side of the occupant. Moreover, a pad cover is mounted at the occupant's side of the bag body so as to cover the inflator, the bag body, and the like from the side of the occupant.

In the air bag device like the above, when a state of sudden deceleration of a vehicle is detected by the actuating device of the inflator, the actuating device causes the detonator to ignite, and the gas generating material is burnt via the booster. As a result, a large quantity of gas is generated within the inflator. The gas generated within the inflator is blown out from the gas blowout holes into the bag body to inflate the bag body after fragments or the like produced at the time of combustion have been removed by the filter. When the bag body inflates and presses against the pad cover from the back side of the pad cover, the pad cover is broken to be opened. As a result, the bag body expands toward the vehicle occupant.

On the other hand, the gas immediately after having been blown out from the gas blowout holes of the inflator is in a high-temperature state, and therefore, when the high-temperature gas is directly blown against the bag body, there is a possibility that the bag body is damaged by heat of the gas. For this reason, in a conventional air bag device, a patch is applied by stitching to the bag body at a position where gas is blown against so as to reinforce the bag body, thereby preventing damage or the like of the bag body caused by the heat of gas.

Concretely, in an inflator of a conventional air bag device, gas blowout holes are formed to be opened facing in a radial direction of a steering wheel. For this reason, a patch is applied by stitching to a bag body at a position facing the gas blowout holes of the bag body, i.e., a position near a connecting portion of a base plate and the bag body, and the bag body is thereby protected from the heat of gas.

Further, in recent years, an inflator in which gas blowout holes are opened in an inclined manner from the radial direction of the steering wheel to the side of a vehicle occupant is applied to an air bag device, and correspondingly, a patch is applied by stitching to a bag body at a position facing the vehicle occupant so as to protect the bag body from the heat of gas.

On the other hand, in the bag body of the above-described conventional air bag device, a patch is applied at a predetermined position on the bag body and the entire patch is sewn on the bag body along a peripheral edge of the patch. For this reason, a sewing region is large, thereby resulting in an increase in cost for sewing.

### SUMMARY OF THE INVENTION

In view of the above-described circumstances, it is an object of the present invention to provide a bag body of an air bag device in which the bag body can be protected from heat of a high-temperature gas at a low cost.

In accordance with a first aspect of the present invention, there is provided a bag body of an air bag device, which comprises: a bag main body which is accommodated in a folded state and is provided to be inflatable due to pressure of gas blown out from a gas blowout hole of an inflator; and a main body protecting member hung down from the bag main body so as to be interposed between the bag main body and the gas blowout hole.

In the bag body of the air bag device according to the first aspect of the present invention, when the inflator operates, a large quantity of gas is generated within the inflator and is blown out from the gas blowout hole toward an exterior of the inflator, and the bag main body is thereby inflated.

Since the main body protecting member is hung down from the bag main body and is interposed between the bag main body and the gas blowout hole, a high-temperature gas immediately after having been blown out from the gas blowout hole is blown against the main body protecting member without being directly blown against the bag main body, and the bag main body is protected from the high-temperature gas by the main body protecting member. For this reason, there is no possibility that the bag main body is subjected to damage or the like caused by the high-temperature gas, and the bag main body can satisfactorily inflate to expand.

In addition, the structure of the bag body of the air bag device according to the above aspect is such that the main body protecting member is merely hung down from the bag main body. For this reason, for example, when the main body protecting member is applied to the bag main body by stitching or the like, a conventional method in which a patch is sewn on a bag body over a wide region is not required, the main body protecting member can be applied by stitching to the bag main body in an extremely small region.

In accordance with a second aspect of the present invention, there is provided a bag body of an air bag device according to the first aspect, wherein the main body protecting member is sewn on said bag main body together with straps which are provided within the bag main body to restrict an inflated state of the bag main body, and is hung down from a sewing-together portion of the bag main body and the straps.

In the bag body of the air bag device according to the second aspect of the present invention, since the main body protecting member is together with the straps sewn on the bag main body, it is not necessary to specially provide a process for sewing the main body protecting member on the bag main body, and the main body protecting member can be applied to the bag main body at a further reduced cost.

### BRIEF DESCRIPTION OF THE DRAWINGS

Fig. 1 is a cross-sectional view showing a construction of an air bag device to which a bag body according to an embodiment of the present invention is applied.

Fig. 2 is a diagram showing a state in which the bag body according to the embodiment of the present invention has expanded.

Fig. 3 is an enlarged cross-sectional view, corresponding to Fig. 1, of a portion of the air bag device, to which the bag body according to the embodiment of the present invention is applied, in the vicinity of a trailing portion of a protective cloth.

### DESCRIPTION OF THE PREFERRED EMBODIMENTS

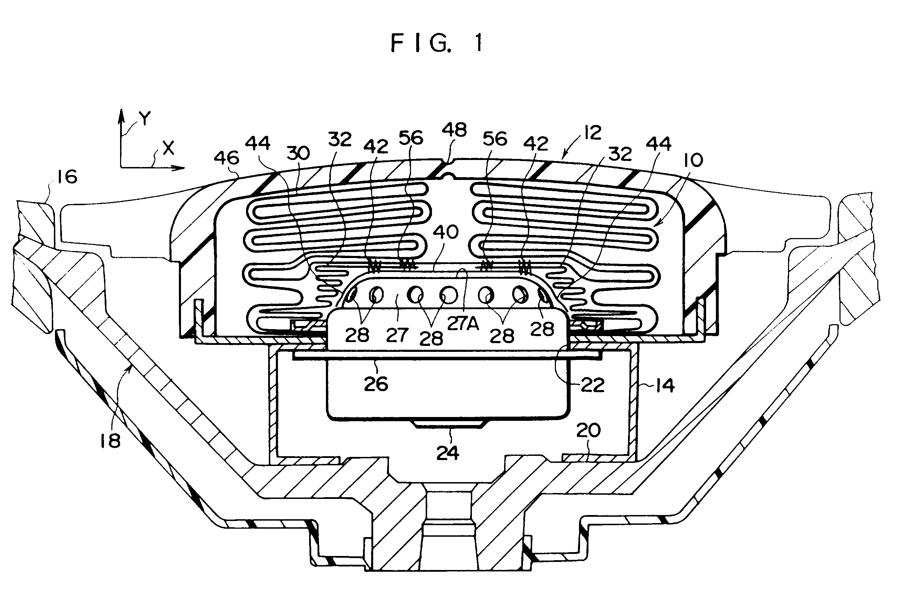

Fig. 1 is a cross-sectional view of an air bag device 12 for a driver's seat to which a bag body 10 according to an embodiment of the present invention is applied.

As shown in Fig. 1, the air bag device 12 includes a base plate 14. The base plate 14 is fixed to a hub 20 provided in a core bar 18 of a steering wheel 16 and is mounted on an interior side of the steering wheel 16. A circular hole 22 is formed in the central portion of the base plate 14 and one half of a columnar inflator 24 at a vehicle occupant's side (i.e., the side of the inflator 24 in the direction indicated by arrow Y in Fig. 1) is provided to pass through the circular hole 22.

A flange 26 is formed in an intermediate portion in an axial direction of the inflator 24 so as to extend outward in a radial direction of the inflator 24. The flange 26 is fixed to the base plate by bolts (not shown) and the inflator 24 is thereby fixed at a predetermined position.

An actuating device, a detonator, a booster, a gas generating material, and a filter (any of them are not shown) are accommodated within the inflator 24. When the actuating device operates to ignite the detonator and the gas generating material is burnt via the booster, a large quantity of gas can be generated within the inflator 24.

An upper portion of the inflator 24 (on the vehicle occupant's side) is formed as a gas blowout portion 27. The gas blowout portion 27 is formed in the shape of a dish with a peripheral edge thereof being bent toward the base plate 14, and a plurality of circular gas blowout holes 28 are formed on a circumferential surface of the gas blowout portion 27 at predetermined intervals. The gas generated within the inflator 24 is blown out of the inflator 24 from these gas blowout holes 28. Meanwhile, since the peripheral edge of the gas blowout portion 27 is bent toward the base plate 14, these gas blowout holes 28 are each inclined to the side of the vehicle occupant (i.e., in the direction indicated by arrow Y in Fig. 1) with respect to the radial direction of the inflator 24 (i.e., the direction indicated by arrow X in Fig. 1). As a result, when the gas generated within the inflator 24 is blown out from the gas blowout holes 28, the gas is blown off in an obliquely upward direction on the paper of Fig. 1).

Further, the bag body 10 is disposed at the vehicle occupant's side of the inflator 24.

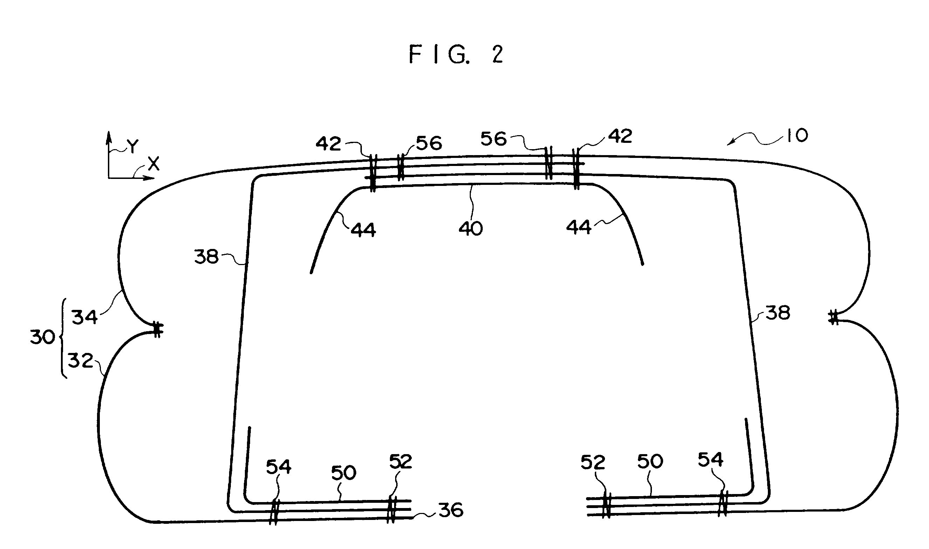

Fig. 2 shows a state in which the bag body 10 has expanded. As shown in this drawing, the bag body 10 includes a bag main body 30 which inflates due to the pressure of gas from the inflator 24. The bag main body 30 is formed by two pieces of main body cloth 32, 34. One main body cloth 32 is disposed on the side of the base plate 14 and is fixed together with the inflator 24 to the base plate 14 by bolts. Further, a circular hole 36 is formed in the main body cloth 32 so as to correspond to the inflator 24, and in a state in which the main body cloth 32 is fixed to the base plate 14, the inflator 24 is provided to pass through the circular hole 36.

A reinforcing cloth 50 is provided in an interior side of the main body cloth 32. The reinforcing cloth 50 is sewn on the main body cloth 32 at sewn-together portions 52, 54 and is fixed together with the main body cloth 32 to the base plate 14. As a result, a portion where the bag main body 30 (main body cloth 32) and the base plate 14 are connected is reinforced, and even when the force generated by swelling of the bag main body 30, namely, the pressure of gas from the inflator 24 is applied to the above connecting portion, the bag main body 30 (main body cloth 32) can be prevented from being damaged.

On the other hand, another main body cloth 34 is positioned on the vehicle occupant's side of the main body cloth 32 and a peripheral edge portion thereof is uniformly sewn together with the main body cloth 32. As a result, the bag main body 30 is as a whole formed in the shape of a bag, and in an ordinary state, it is folded in a predetermined form (i.e., the state shown in Fig. 1) so as to expand into a predetermined shape (i.e., the state shown in Fig. 2) when the gas from the inflator 24 is blown off into the bag main body 30.

Further, a plurality of straps 38 are provided within the bag main body 30 and are each formed in the shape of a band. One end in a longitudinal direction of the straps 38 is sewn on the main body cloth 34 at sewn-together portions 56 and another end is sewn on the main body cloth 32 and the reinforcing cloth 50 at the sewn-together portions 52, 54. When the bag body 10 (the bag main body 30) inflates to expand, these straps 38 restricts inflation of the bag main body 30 toward the vehicle occupant. As a result, expansion of the bag main body 30 into a predetermined expanded form (i.e., the state shown in Fig. 2).

In addition, a protective cloth 40 serving as a main body protecting member is provided within the bag main body 30. The protective cloth 40 has a substantially circular configuration and is circularly sewn together with these straps 38 on the main body cloth 34 at the sewn-together portions 42 disposed at a substantially central portion of the circle of the protective cloth 40 so as to be integrated with the main body cloth 34. A portion of the protective cloth 40 which is disposed further on an exterior side than the sewn-together portions 42 is formed as a trailing portion 44 which hangs down from the main body cloth 34 (bag main body 30) to the side of the base plate 14.

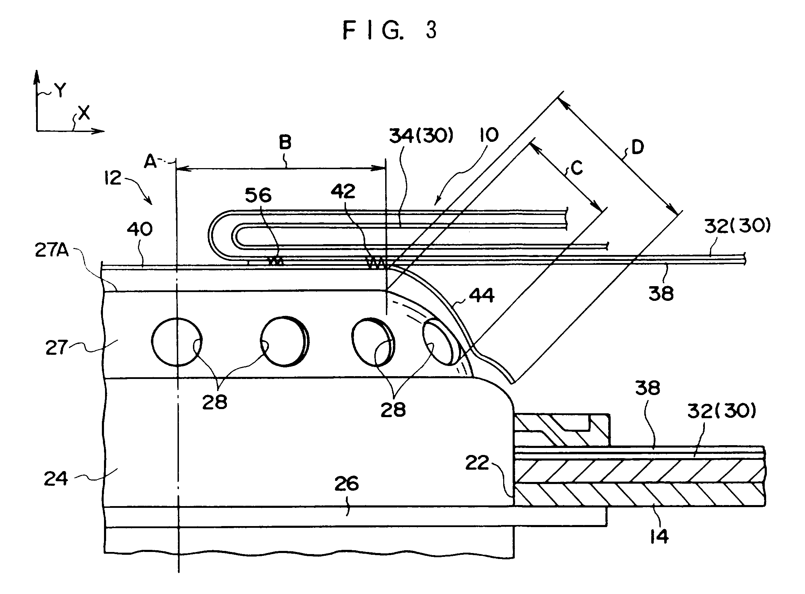

Fig. 3 is an enlarged cross-sectional view showing the trailing portion 44 and its vicinities in a state in which the bag main body 30 is folded (i.e., the state shown in Fig. 1). Meanwhile, although hatching should be originally applied to each of the main body cloths 32, 34, hatching for each cloth will be omitted in the drawing so as to prevent confusion with sewing lines such as the sewing-together portions 52 and the like.

As shown in Fig. 3, the protective cloth 40 is formed in that a dimension B from an axial line A of the inflator 24 to the sewing-together portion 42 corresponds to a radius of a ceiling portion 27A of the gas blowout portion 27 and a dimension D from the sewing-together portion 42 to a peripheral end portion of the trailing portion 44 (i.e., a peripheral end portion of the protective cloth 40) is made longer than a dimension C from the ceiling portion 27A to a lower end portion of each gas blowout hole 28. For this reason, with the bag main body 30 being in a folded state, the trailing portion 44 is interposed between the gas blowout holes 28 of the inflator 24 and the bag main body 30.

Returning now to Fig. 1, a pad cover 46 is provided at the vehicle occupant's side of the bag body 10 in such a manner as to cover the inflator 24 and the bag body 10 disposed on the base plate 14 from the side of the vehicle occupant. Further, a weakened portion 48 having a small thickness is formed partially in the pad cover 46. When the bag body 10 inflates to expand, the weakened portion 48 is broken to unfold the bag body 10, and the bag body 10 can thereby inflate toward the vehicle occupant.

Next, an operation of the present embodiment will be described.

In the air bag device 12 to which the bag body 10 according to the present embodiment is applied, when a vehicle is brought into the state of sudden deceleration, the actuating device of the inflator 24 operates to ignite the detonator, and the gas generating material is burnt via the booster. As a result, a large quantity of gas is generated within the inflator 24. After fragments or the like produced at the time of combustion have been removed by the filter, the gas generated within the inflator 24 is blown out from the gas blowout holes 28 to inflate the bag body 10. With the bag body 10 (bag main body 30) being in a folded state, the trailing portion 44 of the protective cloth 40 is interposed hangingly between the gas blowout holes 28 of the inflator 24 and the bag main body 30, and therefore, high-temperature gas immediately after having blown out from the gas blowout holes 28 is blown against the trailing portion 44 of the protective cloth 40 without being blown against the bag main body 30 and the straps 38. For this reason, the bag main body 30 and the straps 38 are protected from the heat of gas and the bag main body 30 can be inflated satisfactorily without causing damage to the bag main body 30 and the straps 38.

When the bag main body 30 inflates in the above-described manner, the pad cover 46 is pressed by the inflating bag body 10 from the rear side thereof. The pressing force causes the weakened portion 48 of the pad cover 46 to be broken and the pad cover 46 is opened. Moreover, when the bag main body 30 inflates toward the vehicle occupant by a predetermined distance, further inflation of the bag main body 30 toward the vehicle occupant is restricted by the straps 38. As a result, it is possible to expand the bag main body 30 toward the vehicle occupant in a predetermined expanded form.

As described above, the bag body 10 of the air bag device 12 is constructed in that the trailing portion 44 is provided to be hung down from the sewing-together portion 42 of the bag main body 30 and the protective cloth 40 and is interposed between the bag main body 30, the straps 38 and the gas blowout holes 28. Accordingly, the bag main body 30 and the straps 38 can be protected from high-temperature gas immediately after having blow out from the gas blowout holes 28, and the bag main body 30 can be inflated to expand in an extremely preferable manner without causing heat damage or the like to the bag main body 30 and the straps 38.

Further, the trailing portion 44 is merely hung down between the gas blowout holes 28 and the bag main body 30, and therefore, it suffices that the protective cloth 40 is sewn on the bag main body 30 so that the trailing portion 44 can be hung down between the gas blowout holes 28 and the bag main body 30. For this reason, a conventional method in which a patch is sewn on a bag body in a wide region is not required, and the protective cloth 40 can be sewn on the bag main body 30 at a minimum of the sewing region. As a result, substantial reduction in cost for sewing can be achieved.

Meanwhile, although the present embodiment is constructed in that the bag main body 30 and the straps 38 are sewn together at the sewing-together portion 56 and the bag main body 30, the straps 38 and the protective cloth 40 are sewn together at the sewing-together portion 42, a structure in that the bag main body 30, the straps 38, and the protective cloth 40 are sewn together only at the sewing-together portion 42, i.e., only at one sewing-together processing may also be applied. In this case, it is not necessary to specially provide a process for sewing the protective cloth 40, i.e., a process for forming the trailing portion 42, and further reduction in cost for sewing can be achieved accordingly.

Further, the structure provided by the present embodiment is such that the bag body 10 is applied to the air bag device 12 for a driver's seat which is mounted at the steering wheel and in which the gas blowout holes 28 are each inclined toward the vehicle occupant with respect to the radial direction of the inflator 24. However, for example, the above-described bag body 10 may be applied to an air bag device in which gas blowout holes are each opened to face in a horizontal direction with respect to the radial direction of an inflator, an air bag device for a front passenger seat, a side-impact air bag device, or an air bag device installed at other location. In these cases as well, the above-described effects can be exhibited.

## Claims

1. A bag body of an air bag device, comprising:
a bag main body which is accommodated in a folded state and is provided to be inflatable due to pressure of gas blown out from a gas blowout hole of an inflator; and
a main body protecting member hung down from said bag main body so as to be interposed between said bag main body and the gas blowout hole.

2. A bag body of an air bag device according to claim 1, wherein said main body protecting member is sewn on said bag main body together with straps which are provided within said bag main body to restrict an inflated state of said bag main body, and is hung down from a sewing-together portion of said bag main body and the straps.

3. A bag body of an air bag device according to claim 2, wherein the inflator is provided in such a manner that a portion thereof including the gas blowout hole is disposed on an inner side of said bag main body, and the sewing-together portion substantially faces the portion of the inflator including the gas blowout hole.

4. A bag body of an air bag device according to claim 1, wherein said main bag protecting member is sewn on an inner surface of said bag main body.

5. A bag body of an air bag device according to claim 4, wherein the inflator includes a plurality of gas blowout holes arranged annularly, and said main body protecting member has a substantially circular configuration in which a central portion thereof is annularly sewn on said bag main body and a portion thereof disposed further toward an outer side than the sewing-together portion is hung down so as to be interposed between said bag main body and the gas blowout holes.

6. A bag body of an air bag device according to claim 2, wherein said main body protecting member is a protective cloth.

7. A bag body of an air bag device according to claim 1, wherein said air bag device is an air bag device for a driver's seat.
